# EUROPEAN PATENT SPECIFICATION

(11) **EP 1 952 007 B1**
(45) Date of publication and mention of the grant of the patent: **27.07.2011**
(21) Application number: 06794152.6
(22) Date of filing: 10.10.2006
(51) Int. Cl.: F02M 25/028

(54) **METHOD AND ARRANGEMENT FOR TREATING THE INLET AIR AND EXHAUST GASES OF AN INTERNAL COMBUSTION ENGINE**
VERFAHREN UND ANORDNUNG ZUR BEHANDLUNG VON EINLASSLUFT UND ABGASEN EINES VERBRENNUNGSMOTORS
PROCEDE ET CONFIGURATION POUR LE TRAITEMENT DE L'AIR D'ADMISSION ET DES GAZ D'ECHAPPEMENT D'UN MOTEUR A COMBUSTION INTERNE

(30) Priority: 21.10.2005 FI 20055567
(43) Date of publication of application: 06.08.2008
(73) Proprietor: STX Finland Oy, 20240 Turku (FI)
(72) Inventor: YLINEN, Esa, FI-00630 Helsinki (FI)
(74) Representative: Gustafsson, Aulis Valdemar
(86) International application number: PCT/FI2006/050435
(87) International publication number: WO 2007/045721

(56) References cited:
- DE-A1- 4 231 681
- DE-A1- 19 918 591
- US-A- 5 657 630
- US-B1- 6 301 890

## Description

The invention relates to a method according to the preamble of claim 1 for treating the inlet air and exhaust gases of a large supercharged internal combustion engine, especially a diesel engine, in a system, in which water in a suitable form, for instance as water vapour or water mist, is supplied after the compressor to the inlet air of the engine for cooling and saturating the Inlet air, and in which the exhaust gases from the engine are conducted to an exhaust gas scrubber to be washed and cooled at least mainly by water. The invention also relates to an arrangement according to claim 7 for applying the method.

Large Internal combustion engines refer here to such engines that are suitably used e.g. as main or auxiliary engines of ships, or for heat and/or electricity production at power plants.

In large internal combustion engines, especially In diesel engines, it Is known from prior art to cool the air introduced to the engine after the compressor by injecting water, in practise either in the form of vapour or fine water mist, thereto. When evaporating, the injected water cools down the air and humidifies it close to saturation point. The inlet air saturated by water vapour decreases the combustion temperatures in the cylinder, whereby it is possible to reduce the nitrogen emissions from the combustion air, i.e. the so-called NOx-emissions (nitrogen oxides), which contribute to the acidification and eutrophication of the environment. This process (combustion air saturation system) consumes a lot of energy, a part of which is typically consumed by the production of fresh water by evaporation, since the process sets very strict quality standards, in terms of allowed minerals, for the water used therein. The process also consumes a lot of water, for instance in comparison with the amount of fuel, the water consumption is double. Thus, the availability of fresh water suitable for the process is extremely important In view of applying the process. The equipment required by the process may as such be fairly simple and affordable. Thus, the costs of the process application are primarily brought about by the production of fresh water and the related equipment.

In order to reduce fuel costs, internal combustion engines have been developed so that they may use even fuels of lower quality, for Instance heavy fuel oil. The problem often involved in these low-cost fuels is the impurities they contain, especially sulphur, which as a result of the combustion process generates sulphur oxides, SOx, which also contribute to the acidification when emitted to the environment. Attempts have been made to eliminate this disadvantage by introducing the exhaust gases of the internal combustion engine to an exhaust gas scrubber, in which they are washed mainly by water, and by adding specific additives, for instance sodium hydroxide (NaOH), limestone (CaCO3) or lye (NH4OH) thereto, as required, before discharging the exhaust gases to the environment. When sufficiently saline seawater is used as wash water, additives are required to a minor extent or not at all.

US 6301890B1 shows a gas mixture system of an internal combustion engine with a scrubber for cleaning the exhaust gases from the engine and several generators arranged on a common shaft to provide mechanical energy. The engine has an inlet manifold into which water and heat in the form of steam and moistured gases are fed via different routes.

An object of the invention is to provide a method and an arrangement for applying the method, by which the above-mentioned processes can be performed more cost-effectively than before, considering the overall economy of the system, and the equipment required by the application of which is as simple as possible.

The objects of the invention are primarily achieved as disclosed in the appended claims 1 and 7, and more closely as explained In the other claims. According to the invention, the exhaust gases are cooled in the exhaust gas scrubber In order to condensate the water vapour in the exhaust gases and recover clean water, and the thus recovered water is conducted to the inlet air of the engine so that said cooling and saturating of the inlet air are at least mainly performed by the water recovered from the exhaust gas scrubber. The invention is thus based on the idea that since the hot exhaust gases contain water vapour as a combustion product of fuel, a lot of water vapour as a result of the humidification of the engine inlet air as well as water vapour produced by the cooling of the hot exhaust gases in the scrubber, the water vapour heated by the waste heat of the exhaust gases may preferably be taken into use by cooling down the exhaust gases, whereby the water, which is required by the humidification of the engine inlet air in the CASS-process and which otherwise would require a system of its own for the production of fresh water, may preferably be produced in conjunction with the exhaust gas scrubber itself. Thus, it is possible to deal with the NOx- and SOx-emissions from the engine more advantageously than before in view of the overall economy.

In the exhaust gas scrubber the cooling of the exhaust gases is accomplished in at least two stages, which are preferably arranged successively in vertical direction. The recovery of water to be supplied to the engine is thus carried out in the upper part of the exhaust gas scrubber or at the latter stage. The water recovered in this manner does no longer contain, at least to an essential extent, cleaning agents and is therefore as clean as possible so as to be supplied to the engine inlet air. Naturally, the water may, if necessary, be even led through a filter before the introduction thereof.

A part of the water vapour in the exhaust gases is recovered in the lower part of the exhaust gas scrubber and is used for washing the exhaust gases in the lower part of the exhaust gas scrubber. Thus, the actual primary washing of the exhaust gases may be adapted to form a cycle of its own, to which additional water, which as such does not have too strict standards of purity, is introduced, as required. From time to time, washing refuse is discharged from this cycle.

After the compressor, water is supplied to the inlet air preferably in two stages, whereby additional heat is delivered to the inlet air between these stages. In this way, more water can be evaporated and supplied to the Inlet air after the compressor, which again contributes to the reduction of NOx-emissions, in practise, the additional heat may advantageously be supplied by means of the steam produced by the exhaust gases, which requires a separate water circulation. Alternatively, the additional heat may advantageously be provided also by conducting at least a part of the exhaust gases via a heat exchanger arranged in the Inlet air passage of the engine. Naturally, no separate fluid circulation is required for transferring heat energy In this case.

Additional heat may advantageously be delivered also to the washing section of the exhaust gas scrubber. Then, the amount of evaporating wash water is increased and the temperature of the dew point of the exhaust gases will rise to some extent. In this manner, the production of clean water provided by cooling the exhaust gases may be increased. The additional heat suitable for this purpose is preferably heat recovered by the cooling of the engine, specifically the cylinder liners and cylinder head, so-called HT heat, which is transferred to the water circulation in the washing section of the exhaust gas scrubber. The evaporated wash water may advantageously be replaced by water, which is not suitable for cooling charge air and is much more contaminated than that, whereby the method may be applied for a fairly long time even without any external source of cooling.

The invention also related to an arrangement for applying the method, which arrangement is characterised in what is disclosed in claim 7. The method and the arrangement applying it may preferably be utilised on a water craft or another structure placed in water. Then, the cooling of the exhaust gases in the exhaust gas scrubber may be accomplished at least partially by seawater, as the temperature of seawater is usually suitably low and its sufficiency is normally not a problem.

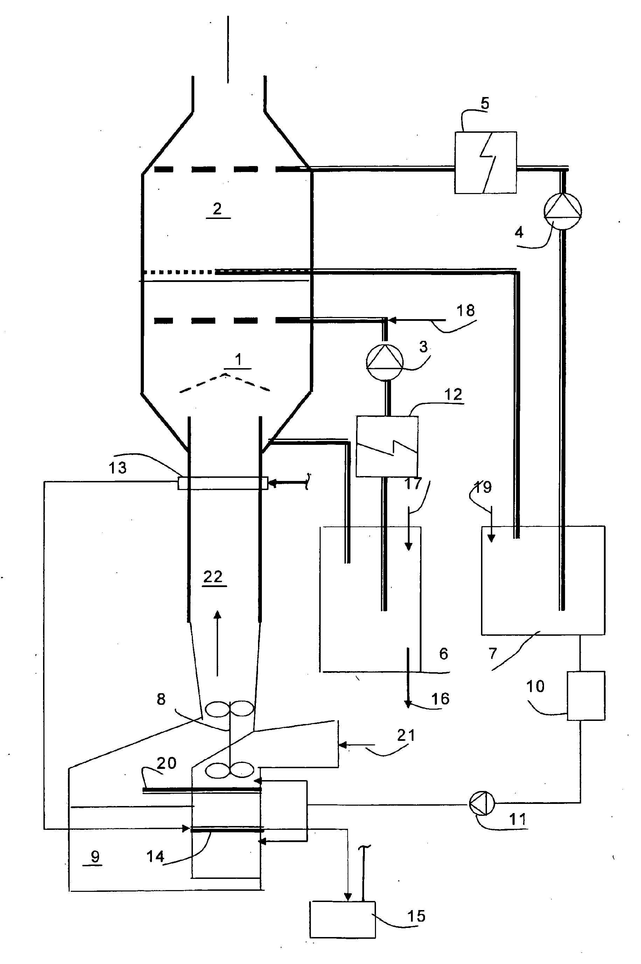

In the following the invention is explained by way of example with reference to the appended schematic drawing, the single figure in which illustrates the treatment of exhaust gases, and related production, recovery and introduction of fresh water in the manner according to the invention to the inlet air of an internal combustion engine.

The drawing shows schematically an internal combustion engine 9, which may be especially a large diesel engine, to which inlet air 21 is conducted and from which exhaust gases 22 are discharged as a result of the combustion process. The engine is also provided with a turbocompressor 8.

The exhaust gases 22 are conducted to an exhaust gas scrubber 1, in which they are washed, in order to remove sulphur dioxides SOx in particular, before being discharged to the environment. In the drawing only one actual washing cycle is shown, but the washing may, if so required, be performed in one or several stages, and it is carried out mainly by using water. In the scrubber the exhaust gases also cool in conjunction with the washing itself. In the case shown in the drawing the scrubber is placed vertically and it illustrates only one actual washing stage in the lower part of the scrubber. The flow circulation of the wash water comprises a wash water tank 6, from which the wash water is pumped by a pump 3 to the lower part of the scrubber. Before the introduction of the wash water, some washing agent, for instance sodium hydroxide (NaOH), limestone (CaCO3) or lye (NH4OH), is added thereto, if so required. This is indicated by the reference number 18. The cycle also includes a heat exchanger 12, by which additional heat is delivered to the scrubber for increasing the amount of evaporating wash water to be recovered, or the wash water may be cooled down in order to partially condensate the steam already at the washing stage. Correspondingly, make-up water 17 may be added to the tank 6.

After the washing stage of the exhaust gases the exhaust gas flow saturated by water vapour is taken further to be cooled in a cooling section 2, which may in practise consist of the upper part of the scrubber 1, or of the latter end thereof, if the scrubber is arranged in horizontal position. At this stage the exhaust gases and the water vapour therein is already clean, whereby water vapour is recovered into a tank 7 to be further introduced to the inlet air 21 of the engine 9 after the compressor 8, as is explained in more detail further below.

In the cooling unit 2 of the scrubber the cooling of the exhaust gases may occur in various ways. In the case shown in the drawing clean water is pumped from the tank 7 by a pump 4 via a heat exchanger 5 to the cooling unit 2, whereby the cooling of the exhaust gases saturated by water vapour is carried out by means of water drops. Both the water used for the cooling and the clean water condensated by means of it from water vapour into water are recovered and conducted to the tank 7. Make-up water 19 is introduced into the tank 7, as required. After the cooling unit 2 the exhaust gases are discharged to the atmosphere.

An advantageous alternative way to cool down the exhaust gases in the cooling unit 2 would be to place the heat exchanger 5 directly into the cooling unit 2 of the scrubber. In this case no reintroduction of clean water to the scrubber would be required, but the structure of the scrubber could be more complicated.

In case the engine 9 with its systems is placed on a watercraft or other structure placed in water, seawater may advantageously be used as a cooling liquid of the heat exchanger 5 in both above-mentioned cases. Similarly, in the flow circulation of wash water in sea applications seawater may be used in the tank 6 to be pumped to the scrubber and as make-up water 17. If the seawater is sufficiently saline, additives 18 are required in this case only to a minor extent or not at all.

The clean water collected in the tank 7 is led through a filter 10 for clean water by means of a pump 11 to be introduced to the inlet air 21 of the engine after the compressor 8. In practise, the introduction may preferably be performed in two stages so that additional heating of the flow is provided between the stages. The purpose of this is to get more water evaporated and supplied to the inlet air after the compressor 8, whereby also the reduction of NOx-emissions in the combustion process of the engine is more efficient.

In practise, the additional heat may advantageously be delivered by using the steam produced by means of the exhaust gases 22 in a heat exchanger 13, which requires a separate water circulation with a feed water tank 15. Alternatively, the additional heat may advantageously be provided also by conducting at least a part of the exhaust gases 22 via an exhaust gas heat exchanger 20 arranged in the inlet air passage of the engine. Naturally, no separate fluid circulation is required for transferring heat energy in this case.

In large internal combustion engines the amounts of clean water required for the humidification of the inlet air are fairly large, as mentioned in the above. Exhaust gases, on the other hand, contain about 1000 grams of water per produced kilowatt-hour. If the temperature of the exhaust gases discharged from a diesel engine is of the order of 300 °C before the scrubber, they will cool down to a temperature of about 70 - 80 °C at the washing stage and their relative humidity is 100 %. The temperature of the exhaust gases discharged from the cooling unit 2 is not more than about 35 °C, assumed that the temperature of the water in the heat exchanger 5 is about 18 - 20 °C. By means of the invention the water vapour and heat energy contained in the exhaust gases of an internal combustion engine, which is provided with a system for the humidification of inlet air, may thus be advantageously utilised for producing the clean water said humidification system requires.

The invention is not limited to the shown embodiments, but several variations are conceivable within the scope of the appended claims.

## Claims

1. A method of treating the inlet air (21) and exhaust gases (22) of a large supercharged internal combustion engine (9), especially a diesel engine, In a system, in which water in a suitable form, for instance as water vapour or water mist, is supplied after the compressor (8) to the inlet air of the engine for cooling and saturating the inlet air (21), and in which the exhaust gases (22) from the engine are conducted to an exhaust gas scrubber (1,2) to be washed and cooled at least mainly by water, **characterised in that** the exhaust gases (22) are cooled down in the exhaust gas scrubber (1,2) in at least two successive stages, which are preferably arranged in vertical direction, in order to condensate the water vapour in the exhaust gases to recover clean water, that the clean water recovered in the upper part (2) of the exhaust gas scrubber or at the latter stage is conducted to the inlet air (21) of the engine in two successive stages in the flow direction, and that additional heat is delivered to the inlet air (21) via a heat exchanger (14,20) arranged between these successive stages so that said cooling and saturating of the inlet air (21) are at least mainly performed by the water recovered from the exhaust gas scrubber.

2. A method according to claim 1, **characterized in that** a part of the water vapour in the exhaust gases is recovered in the lower part (1) of the exhaust gas scrubber (1,2) and used for washing the exhaust gases in the lower part (1) of the exhaust gas scrubber (1,2).

3. A method according to claim 1 or 2, **characterised in that** the additional heat is delivered by using the steam produced by means of the exhaust gases (22).

4. A method according to claim 1 or 2, **characterised in that** the additional heat is provided by conducting at least a part of the exhaust gases via a heat exchanger (20) arranged in the inlet air passage of the engine.

5. A method according to anyone of the preceding claims, **characterised in that** additional heat is delivered to the washing section (1) of the exhaust gas scrubber (1,2) and that the additional heat is most preferably heat recovered by cooling df the engine, so-called HT heat, which is transferred to the water circulation in the washing section (1) of the exhaust gas scrubber (1,2).

6. A method according to anyone of the preceding claims, **characterised in that** the method is applied on a watercraft or another structure placed in water and that the cooling of the exhaust gases in the exhaust gas scrubber (1,2) is provided at least partially by seawater.

7. An arrangement for treating the inlet air (21) and exhaust gases (22) of a large supercharged internal combustion engine (9), especially a diesel engine, in a system, in which water in a suitable form, for instance as water vapour or water mist, is supplied after the compressor (8) to the inlet air of the engine for cooling and saturating the inlet air (21), and in which the exhaust gases (22) from the engine are conducted to an exhaust gas scrubber (1, 2) to be washed and cooled at least mainly by water, **characterised in that** the exhaust gases (22) are arranged to be cooled in the exhaust gas scrubber (1, 2) in at least two successive stages, which are preferably arranged in vertical direction, in order to condensate the water vapour in the exhaust gases to recover clean water, that the condensated clean water recovered In the upper part (2) of the exhaust gas scrubber or at the latter stage is arranged to be supplied to the inlet air (21) of the engine in two successive stages in the flow direction, and that additional heat is arranged (14, 20) to be delivered directly to the Inlet air (21) by means of a heat exchanger (14;20) placed between these two successive water supply stages so that said cooling and saturating of the inlet air (21) is at least mainly provided by the water recovered from the exhaust gas scrubber (1, 2).

8. An arrangement according to claim 7, **characterised in that** a part of the water vapour in the exhaust gases is arranged to be recovered in the lower part of the exhaust gas scrubber (1, 2) and used for washing and cooling the exhaust gases in the lower part of the exhaust gas scrubber (1, 2).

9. An arrangement according to claim 7 or 8, **characterised in that** the additional heat is arranged to be provided by a steam heat exchanger (13) arranged in the hot exhaust gas flow (22).

10. An arrangement according to claim 7 or 8, **characterised in that** for providing additional heat at least a part of the exhaust gases is arranged to be conducted via a heat exchanger (20) arranged in the inlet air passage of the engine.

11. An arrangement according anyone of the preceding claims 7 - 10, **characterised in that** additional heat is arranged to be delivered to the washing section of the exhaust gas scrubber (1, 2) and that the additional heat is most preferably heat recovered by cooling of the engine, so-called HT-heat, which is arranged to be transferred (12) to the water circulation In the washing section of the exhaust gas scrubber (1, 2).

12. An arrangement according anyone of the preceding claims 7 - 11, **characterised in that** the arrangement is applied on a watercraft or another structure placed in water and that the cooling of the exhaust gases of the exhaust gas scrubber (1, 2) is arranged to be provided at least partially by seawater.

## Patentansprüche

1. Verfahren zum Behandeln der Ansaugluft (21) und der Abgase (22) eines großen aufgeladenen Verbrennungsmotors (9), insbesondere eines Dieselmotors, in einem System, in dem Wasser in einer geeigneten Form, zum Beispiel als Wasserdampf oder Wassernebel, nach dem Kompressor (8) zur Ansaugluft des Motors geliefert wird, um die Ansaugluft (21) zu kühlen und zu sättigen, und wobei die Abgase (22) vom Motor zu einem Abgasreiniger (1, 2) geführt werden, um zumindest hauptsächlich durch Wasser gewaschen und gekühlt zu werden, **dadurch gekennzeichnet, dass** die Abgase (22) im Abgasreiniger (1, 2) in zumindest zwei aufeinanderfolgenden Stufen abgekühlt werden, die vorzugsweise in der senkrechten Richtung angeordnet sind, um den Wasserdampf in den Abgasen zu kondensieren, um sauberes Wasser rückzugewinnen, dass das saubere Wasser, das im oberen Teil (2) des Abgasreinigers oder in der letzteren Stufe rückgewonnen wurde, in zwei aufeinanderfolgenden Stufen in der Strömungsrichtung zur Ansaugluft (21) des Motors geführt wird, und dass der Ansaugluft (21) über einen Wärmeaustauscher (14, 20), der zwischen diesen aufeinanderfolgenden Stufen angeordnet ist, zusätzliche Wärme geliefert wird, damit das Kühlen und Sättigen der Ansaugluft (21) hauptsächlich durch das Wasser, das vom Abgasreiniger rückgewonnen wurde, durchgeführt wird.

2. Verfahren nach Anspruch 1, **dadurch gekennzeichnet, dass** ein Teil des Wasserdampfs in den Abgasen im unteren Teil (1) des Abgasreinigers (1, 2) rückgewonnen wird und zum Waschen der Abgase im unteren Teil (1) des Abgasreinigers (1, 2) verwendet wird.

3. Verfahren nach Anspruch 1 oder 2, **dadurch gekennzeichnet, dass** die zusätzliche Wärme durch Verwenden des Dampfs, der mittels der Abgase (22) erzeugt wird, geliefert wird.

4. Verfahren nach Anspruch 1 oder 2, **dadurch gekennzeichnet, dass** die zusätzliche Wärme durch Führen zumindest eines Teils der Abgase über einen Wärmeaustauscher (20), der im Ansaugluftdurchgang des Motors angeordnet ist, bereitgestellt wird.

5. Verfahren nach einem der vorhergehenden Ansprüche, **dadurch gekennzeichnet, dass** zusätzliche Wärme zum Waschabschnitt (1) des Abgasreinigers (1, 2) geliefert wird, und dass die zusätzliche Wärme insbesondere durch Kühlen des Motors rückgewonnene Wärme, sogenannte HT-Wärme, ist, die zum Wasserkreislauf im Waschabschnitt (1) des Abgasreinigers (1, 2) übertragen wird.

6. Verfahren nach einem der vorhergehenden Ansprüche, **dadurch gekennzeichnet, dass** das Verfahren auf ein Wasserfahrzeug oder einen anderen im Wasser angeordneten Aufbau angewendet wird, und dass das Kühlen der Abgase im Abgasreiniger (1, 2) zumindest teilweise durch Meerwasser bereitgestellt wird.

7. Anordnung zum Behandeln der Ansaugluft (21) und der Abgase (22) eines großen aufgeladenen Verbrennungsmotors (9), insbesondere eines Dieselmotors, in einem System, in dem Wasser in einer geeigneten Form, zum Beispiel als Wasserdampf oder Wassernebel, nach dem Kompressor (8) zur Ansaugluft des Motors geliefert wird, um die Ansaugluft (21) zu kühlen und zu sättigen, und wobei die Abgase (22) vom Motor zu einem Abgasreiniger (1, 2) geführt werden, um zumindest hauptsächlich durch Wasser gewaschen und gekühlt zu werden, **dadurch gekennzeichnet, dass** veranlasst wird, dass die Abgase (22) im Abgasreiniger (1, 2) in zumindest zwei aufeinanderfolgenden Stufen, die vorzugsweise in der senkrechten Richtung angeordnet sind, gekühlt werden, um den Wasserdampf in den Abgasen zu kondensieren, um reines Wasser rückzugewinnen, dass veranlasst wird, dass das kondensierte reine Wasser, das im oberen Teil (2) des Abgasreinigers oder in der letzteren Stufe rückgewonnen wurde, in zwei aufeinanderfolgenden Stufen in der Strömungsrichtung zur Ansaugluft (21) des Motors geliefert wird, und dass veranlasst wird (14, 20), dass zusätzliche Wärme mittels eines Wärmeaustauschers (14, 20), der zwischen diesen beiden aufeinanderfolgenden Wasserlieferstufen angeordnet ist, direkt zur Ansaugluft geliefert wird, so dass das Kühlen und Sättigen der Ansaugluft (21) zumindest hauptsächlich durch das Wasser, das vom Abgasreiniger (1, 2) rückgewonnen wurde, bereitgestellt wird.

8. Anordnung nach Anspruch 7, **dadurch gekennzeichnet, dass** veranlasst wird, dass ein Teil des Wasserdampfs in den Abgasen im unteren Teil des Abgasreinigers (1, 2) rückgewonnen und zum Waschen und Kühlen der Abgase im unteren Teil des Abgasreinigers (1, 2) verwendet wird.

9. Anordnung nach Anspruch 7 oder 8, **dadurch gekennzeichnet, dass** veranlasst wird, dass die zusätzliche Wärme durch einen Dampfwärmeaustauscher (13), der im heißen Abgasstrom (22) angeordnet ist, bereitgestellt wird.

10. Anordnung nach Anspruch 7 oder 8, **dadurch gekennzeichnet, dass** zur Bereitstellung von zusätzlicher Wärme veranlasst wird, dass zumindest ein Teil der Abgase über einen Wärmeaustauscher (20), der im Ansaugluftdurchgang des Motors angeordnet ist, geführt wird.

11. Anordnung nach einem der vorhergehenden Ansprüche 7 bis 10, **dadurch gekennzeichnet, dass** veranlasst wird, dass zusätzliche Wärme zum Waschabschnitt des Abgasreinigers (1, 2) geliefert wird, und dass die zusätzliche Wärme insbesondere durch Kühlen des Motors rückgewonnene Wärme, sogenannte HT-Wärme, ist, deren Übertragung (12) zum Wasserkreislauf im Waschabschnitt des Abgasreinigers (1, 2) veranlasst wird.

12. Anordnung nach einem der vorhergehenden Ansprüche 7 bis 11, **dadurch gekennzeichnet, dass** die Anordnung auf ein Wasserfahrzeug oder einen anderen im Wasser angeordneten Aufbau angewendet wird, und dass veranlasst wird, dass das Kühlen der Abgase des Abgasreinigers (1, 2) zumindest zum Teil durch Meerwasser bereitgestellt wird.

## Revendications

1. Procédé de traitement de l'air d'admission (21) et des gaz d'échappement (22) d'un grand moteur à combustion interne suralimenté (9), notamment d'un moteur diesel, dans un système, dans lequel de l'eau sous une forme appropriée, par exemple comme de la vapeur d'eau ou de la brume d'eau, est alimentée après le compresseur (8) dans l'air d'admission du moteur pour refroidir et saturer l'air d'admission (21), et dans lequel les gaz d'échappement (22) provenant du moteur sont conduits vers un laveur de gaz d'échappement (1, 2) pour être lavés et refroidis au moins principalement par de l'eau, **caractérisé en ce que** les gaz d'échappement (22) sont refroidis dans le laveur de gaz d'échappement (1, 2) dans au moins deux étages successifs, qui sont de préférence conçus dans la direction verticale, de manière à condenser la vapeur d'eau dans les gaz d'échappement pour récupérer l'eau propre, **en ce que** l'eau propre récupérée dans la partie supérieure (2) du laveur de gaz d'échappement au niveau du dernier étage est conduite vers l'air d'admission (21) du moteur dans deux étages successifs dans la direction d'écoulement, et **en ce que** de la chaleur additionnelle est délivrée à l'air d'admission (21) via un échangeur thermique (14, 20) conçu entre ces étages successifs de sorte que ledit refroidissement et ladite saturation de l'air d'admission (21) sont effectués au moins principalement par l'eau récupérée du laveur de gaz d'échappement.

2. Procédé selon la revendication 1, **caractérisé en ce que** une partie de la valeur d'eau dans les gaz d'échappement est récupérée dans la partie inférieure (1) du laveur de gaz d'échappement (1, 2) est utilisée pour laver les gaz d'échappement dans la partie inférieure (1) du laveur de gaz d'échappement (1, 2).

3. Procédé selon la revendication 1 ou 2, **caractérisé en ce que** de la chaleur additionnelle est délivrée en utilisant la vapeur produite au moyen des gaz d'échappement (22).

4. Procédé selon la revendication 1 ou 2, **caractérisé en ce que** la chaleur additionnelle est fournie en conduisant au moins une partie des gaz d'échappement via un échangeur thermique (20) conçu dans le passage d'admission d'air du moteur.

5. Procédé selon une quelconque des revendications précédentes, **caractérisé en ce que** de la chaleur additionnelle est délivrée à la section de lavage (1) du laveur de gaz d'échappement (1, 2) et **en ce que** la chaleur additionnelle est de manière encore préférée récupérée thermiquement en refroidissant le moteur, appelée chaleur HT, qui est transférée à la circulation d'eau dans la section de lavage (1) du laveur de gaz d'échappement (1, 2).

6. Procédé selon une quelconque des revendications précédentes, **caractérisé en ce que** le procédé est appliqué sur une embarcation ou une autre structure placée dans l'eau et **en ce que** le refroidissement des gaz d'échappement dans le laveur de gaz d'échappement (1, 2) est fourni au moins partiellement par de l'eau de mer.

7. Agencement de traitement de l'air d'admission (21) et des gaz d'échappement (22) d'un grand moteur à combustion interne suralimenté (9), notamment d'un moteur diesel, dans un système, dans lequel de l'eau sous une forme appropriée, par exemple comme de la vapeur d'eau ou de la brume d'eau, est alimentée après le compresseur (8) dans l'air d'admission du moteur pour refroidir et saturer l'air d'admission (21), et dans lequel les gaz d'échappement (22) provenant du moteur sont conduits vers un laveur de gaz d'échappement (1, 2) pour être lavés et refroidis au moins principalement par de l'eau, **caractérisé en ce que** les gaz d'échappement (22) sont conçus de manière à être refroidis dans le laveur de gaz d'échappement (1, 2) dans au moins deux étages successifs, qui sont de préférence conçus dans la direction verticale, de manière à condenser la vapeur d'eau dans les gaz d'échappement pour récupérer l'eau propre, **en ce que** l'eau propre condensée récupérée dans la partie supérieure (2) du laveur de gaz d'échappement ou au niveau du dernier étage est conçue afin d'être alimentée dans l'air d'admission (21) du moteur dans deux étages successifs dans la direction d'écoulement, et **en ce que** de la chaleur additionnelle est conçue (14, 20) afin d'être délivrée directement à l'air d'admission (21) au moyen d'un échangeur thermique (14 ; 20) placé entre ces deux étages d'alimentation d'eau successifs de sorte que ledit refroidissement et ladite saturation de l'air d'admission (21) soit au moins principalement fournis par l'eau récupérée du laveur de gaz d'échappement (1, 2).

8. Agencement selon la revendication 7, **caractérisé en ce que** une partie de la vapeur d'eau dans les gaz d'échappement est conçue pour être récupérée dans la partie inférieure du laveur de gaz d'échappement (1, 2) et utilisée pour laver et refroidir les gaz d'échappement dans la partie inférieure du laveur de gaz d'échappement (1, 2).

9. Agencement selon la revendication 7 ou 8, **caractérisé en ce que** de la chaleur additionnelle est conçue afin d'être fournie par un échangeur thermique de vapeur (13) conçu dans le flux de gaz d'échappement chaud (22).

10. Agencement selon la revendication 7 ou 8, **caractérisé en ce que** pour fournir de la chaleur additionnelle au moins une partie des gaz d'échappement est conçue afin d'être conduite via un échangeur thermique (20) conçu dans le passage d'air d'admission du moteur.

11. Agencement selon une quelconque des revendications précédentes 7 à 10, **caractérisé en ce que** de la chaleur additionnelle est conçue afin d'être délivrée à la section de lavage du laveur de gaz d'échappement (1, 2) et **en ce que** de la chaleur additionnelle est de manière encore préférée récupérée en refroidissant le moteur, appelée chaleur HT, qui est conçue afin d'être transférée (12) à la circulation d'eau dans la section de lavage du laveur de gaz d'échappement (1, 2).

12. Agencement selon une quelconque des revendications précédentes 7 à 11, **caractérisé en ce que** l'agencement est appliqué sur une embarcation ou une autre structure placée dans l'eau et **en ce que** le refroidissement des gaz d'échappement du laveur de gaz d'échappement (1, 2) est conçu afin d'être fourni au moins partiellement par de l'eau de mer.
